(19) Europäisches Patentamt
European Patent Office
Office européen des brevets

(11) **EP 1 938 436 B1**

(12) **EUROPEAN PATENT SPECIFICATION**

(45) Date of publication and mention of the grant of the patent:
**07.10.2009 Bulletin 2009/41**

(51) Int Cl.:
*H02J 3/28* (2006.01)  *H02J 3/38* (2006.01)
*H02J 7/34* (2006.01)

(21) Application number: **06822408.8**

(22) Date of filing: **20.10.2006**

(86) International application number:
**PCT/JP2006/321439**

(87) International publication number:
**WO 2007/046547 (26.04.2007 Gazette 2007/17)**

(54) **CHARGED/DISCHARGED POWER CONTROL FOR A CAPACITOR TYPE ENERGY STORAGE DEVICE**

GELADEN/ENTLADEN-LEISTUNGSREGELUNG FÜR EINE ENERGIESPEICHEREINRICHTUNG DES KONDENSATORTYPS

COMMANDE DE PUISSANCE DE CHARGE/DECHARGE POUR DISPOSITIF DE STOCKAGE D'ENERGIE DE TYPE CONDENSATEUR

(84) Designated Contracting States:
**DE DK SE**

(30) Priority: **20.10.2005 JP 2005305764**

(43) Date of publication of application:
**02.07.2008 Bulletin 2008/27**

(73) Proprietor: **Nissan Diesel Motor Co., Ltd.
Ageo-shi
Saitama 362-8523 (JP)**

(72) Inventors:
• **SASAKI, Masakazu
c/o NISSAN DIESEL MOTOR CO., LTD.
Ageo-shi, Saitama 3628523 (JP)**

• **SAITOU, Tetsuo
Hachiouji-shi, Tokyo 1930845 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 022 838**     **US-A- 5 969 505**
**US-A1- 2002 068 957**     **US-A1- 2005 225 090**

EP 1 938 436 B1

**Description**

FIELD OF THE INVENTION

This invention relates to a charged/discharged power control for an energy storage device using capacitors.

BACKGROUND OF THE INVENTION

JP 2002-101577 A published by Japan Patent Office in 2002 discloses an energy storage device to stabilize the output power of a wind power generation system.

In this system, an objective level is set for the output power of a wind power generator and, when the output power of the generator exceeds the objective level, the energy storage device is charged with the excess power whereas the energy storage device discharges power to compensate for a shortage when the output power of the generator is lower than the objective level.

Overcharge and overdischarge of the energy storage device has to be avoided in order to ensure the safety and durability of the energy storage device. It is also necessary to keep the charge level of the energy storage device at a proper level so that the energy storage device can provide enough output power for stabilization of the output power of the wind power generation system.

US 2005/0225090 A1 relates to an isolated electrical network with at least one energy producer that is coupled to a first generator. Further, a second generator is provided that is coupled to an internal combustion engine. The second generator, which has the function of a pulse-former, can also be driven by the electrical energy of the first generator being the primary energy producer. Using the second generator as a pulse-former, the internal combustion engine of the second generator can be shut off completely and decoupled from the second generator. In such case, the second generator operates in motor mode and still acts as a pulse-former, whereby the driving energy in this operating mode is the electrical energy from the first generator. The isolated electrical network also comprises a line-commutated DC-AC converter, which synchronizes itself to the pulse-former provided by the second generator operating in the motor mode.

SUMMARY OF THE INVENTION

When lead batteries are used as the energy storage device, inherent properties of the lead batteries make it difficult to detect and figure out the charge level of the energy storage device accurately.

A solution to prevent overcharge and overdischarge of the lead batteries is to increase the capacity of the lead batteries and thus allowing a margin in charge level control, but this method raises the cost of the energy storage device.

In addition, keeping the charge level of the energy storage device at a proper level necessitates frequent maintenance of the batteries, with the result that the maintenance cost increases.

Another problem is that degradation of some of unit cells is unavoidable despite maintenance, and that replacing degraded unit cells elevates the life cycle cost.

In order to solve the above problems related to the properties of the lead batteries, the inventors had an idea to construct an energy storage device from capacitors. The invention relates to an energy storage device for stabilizing and the output of a generator connected thereto based on claims 1 and 6.

The charge amount of a capacitor is expressed by the following Expression (1):

$$\text{Charge amount} = \frac{C \cdot V^2}{2} \text{(joule)} \qquad\qquad (1)$$

wherein, $C$ represents static capacitance (farad) and
$V$ represents voltage (volt).

As can be seen in Expression (1), charging and discharging of a capacitor is accompanied by a change in voltage. The state of charge (SOC) of a capacitor can therefore be figured out from the terminal voltage of the capacitor with precision.

It is therefore an object of this invention to efficiently control an energy storage device using a capacitor.

In order to achieve the above object, this invention provides an energy storage device connected to a generator to stabilize output of the generator, comprising a capacitor system comprising a number of stacked capacitors, an inverter/converter which selectively controls charging and discharging of the capacitor system, and a programmable controller.

The controller is programmed to cause the inverter/converter, when an output power of the generator exceeds an objective level, to charge the capacitor system with an excess power of the generator, cause the inverter /converter, when the output power of the generator is lower than the objective level, to make the capacitor system discharge power so as to compensate for a shortage of the output power of the generator, determine a parameter representing a, charging/discharging condition of the capacitor system, and cause the inverter/converter, when the parameter exceeds a threshold that is set on near side of a limit value, to make a charged power and a discharged power of the capacitor system decrease as the parameter approaches the limit value and equal zero when the parameter reaches the limit value.

This invention also provides a control method for the energy storage device, comprising causing the inverter/converter, when an output power of the generator exceeds an objective level, to charge the capacitor system with an excess power of the generator, causing the inverter/converter, when the output power of the generator is lower than the objective level, to make the capacitor system discharge power so as to compensate for a shortage of the output power of the generator, determine a parameter representing a charging/discharging condition of the capacitor system, and causing the inverter/converter, when the parameter exceeds a threshold that is set on near side of a limit value, to make a charged power and a discharged power of the capacitor system decrease as the parameter approaches the limit value and equal zero when the parameter reaches the limit value.

This invention also provides an energy storage device connected to a generator to stabilize an output power of the generator, comprising a capacitor system comprising a number of stacked capacitors, an inverter/converter which selectively controls charging and discharging of the capacitor system, and a programmable controller.

The controller is programmed to cause the inverter/converter, when the output power of the generator exceeds an objective level, to charge the capacitor system with an excess power of the generator, cause the inverter/ converter, when the output power of the generator is lower than the objective level, to cause the capacitor system to discharge power so as to compensate for a shortage of the output power of the generator, determine a state of charge of the capacitor system, cause the inverter/converter, when the state of charge is higher than a given value, to cause the capacitor system to increase the discharged power by a first bias value, and cause the inverter/converter, when the state of charge is lower than the given value, to cause the capacitor system to increase the charged power of the capacitor system by a second bias value.

This invention also provides a control method for the energy storage device, comprising causing the inverter/converter, when the output power of the generator exceeds an objective level, to charge the capacitor system with an excess power of the generator, causing the inverter/ converter, when the output power of the generator is lower than the objective level, to cause the capacitor system to discharge power so as to compensate for a shortage of the output power of the generator, determining a state of charge of the capacitor system, causing the inverter/converter, when the state of charge is higher than a given value, to cause the capacitor system to increase the discharged power by a first bias value, and causing the inverter/converter, when the state of charge is lower than the given value, to cause the capacitor system to increase the charged power of the capacitor system by a second bias value.

The details as well as other features and advantages of this invention are set forth in the remainder of the specification and are shown in the accompanying drawings.

BRIEF DESCRIPTION OF THE DRAWINGS

FIG. 1 is a schematic diagram of a wind power generation system to which an energy storage device according to this invention is applied.

FIG. 2 is a schematic diagram of the energy storage device.

FIG. 3 is a diagram illustrating the outline of charged/discharged power limitation control according to this invention.

FIG. 4 is a flow chart illustrating a charged/discharged power limitation control routine executed by an inverter/ converter controller according to this invention.

FIG. 5 is a diagram illustrating possible variations of the charged/discharged power limitation control.

FIG. 6 is a diagram illustrating the outline of charged/discharged power limitation control according to a second embodiment of this invention.

FIG. 7 is a flow chart illustrating a charged/discharged power limitation control routine executed by an inverter/ converter controller according to a second embodiment of this invention.

FIG. 8 is a diagram illustrating possible variations of the charged/discharged power limitation control in the second embodiment of this invention.

FIG. 9 is a diagram illustrating the relation between a running time and a state of charge (SOC) of a common capacitor system.

FIG. 10 is a diagram illustrating the outline of charged/discharged power bias control executed by an inverter/ converter controller according to a third embodiment of this invention.

FIG. 11 is a diagram illustrating results of the charged/discharged power bias control according to the third embodiment of this invention.

FIG. 12 is a flow chart illustrating a charged/discharged power bias control routine executed by the inverter/converter controller according to the third embodiment of this invention.

FIG. 13 is a diagram illustrating possible variations of the charged/discharged power bias control in the third embodiment of this invention.

DESCRIPTION OF THE PREFERRED EMBODIMENTS

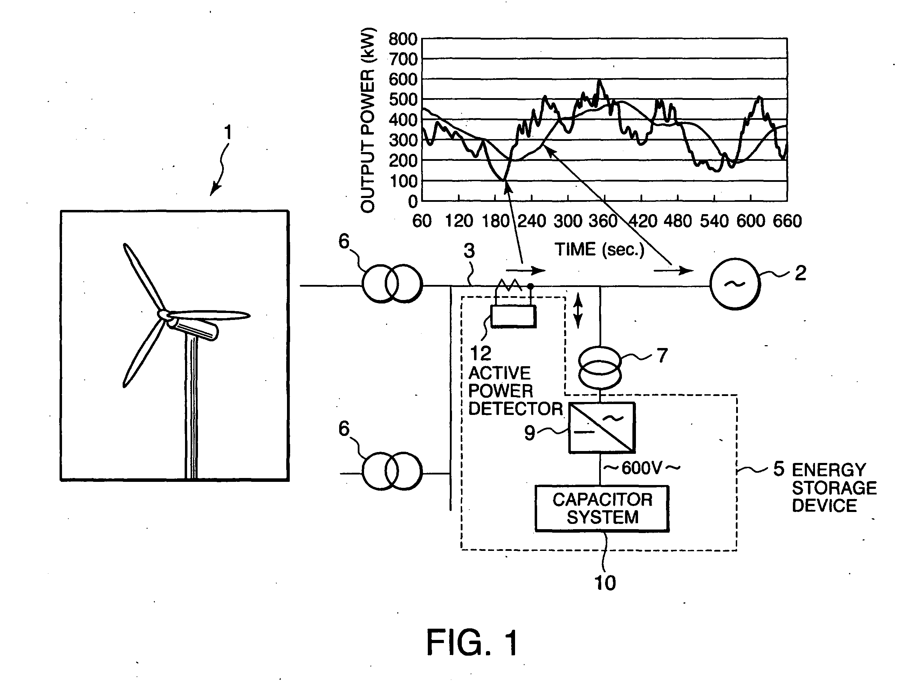

Referring to FIG. 1 of the drawings, a wind power generation system comprises a wind power generator 1 which generates electric power by wind energy, a power transmission route 3 along which power outputted by the wind generator 1 is fed to an electric power system 2 via a transformer 6, and an energy storage device 5, which is connected to the power transmission route 3 via a transformer 7.

The energy storage device 5 comprises a capacitor system 10 which is composed of a predetermined number of electric double layer capacitor cells, an inverter/converter 9 which charges and discharges the capacitor system 10, and an active power detector 12 which detects an output power of the wind power generator 1.

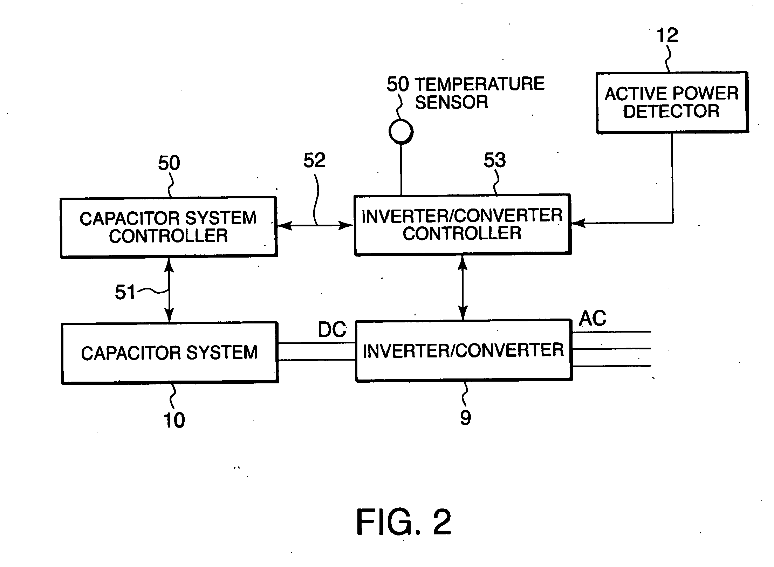

Referring to FIG. 2, the energy storage device 5 further comprises an inverter/converter controller 53 and a capacitor system controller 50.

The capacitor system controller 50 controls the capacitor system 10 via a signal line 51 in order to even out the charge/discharge amount among many capacitor modules that constitute the capacitor system 10. The capacitor system controller 50 also detects a trouble inside the capacitor system 10 and outputs a corresponding signal to the inverter/converter controller 53 via a signal line 52.

The inverter/converter controller 53 controls the operation of the inverter/converter 9 according to a detected value of the active power detector 12 to compensate for output power fluctuations of the wind power generator 1, In this controls, the inverter/converter controller 53 performs charged/discharged power limitation in order to avoid overcharging and overdischarging of the capacitor system 10.

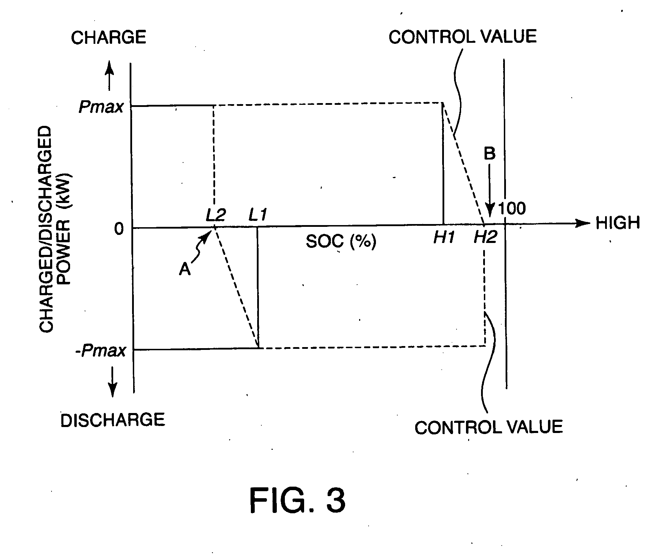

Referring to FIG. 3, for the state of charge (hereinafter abbreviated as SOC) of the capacitor system 10, the upper limit is set to $H2$ (%) and the lower limit is set to $L2$ (%). An upper threshold $H1$ (%), which is smaller than the upper limit $H2$, and a lower threshold $L1$ (%), which is greater than the lower limit $L2$, are set as thresholds of charged/discharged power limitation control. $L1, L2, H1$ and $H2$ are, for example, 40 (%), 30 (%), 90 (%), 95 (%), respectively. $H1$ and $L1$ therefore satisfy a relation $H1 > L1$.

The axis of abscissa shows the SOC. Above a point zero on the axis of ordinate, a state in which the capacitor system 10 is receiving an input of power, in other words, a charge state is indicated by a positive value, whereas a negative value indicates a state in which the capacitor system 10 is outputting power, in other words, a discharge state below the point zero.

Input limitation control in charging the capacitor system 10 will be described first.

At a point A in the drawing, the charged /discharged power of the capacitor system 10 is zero kilowatt (kW), and the SOC equals to the lower limit $L2$.

The inverter/converter controller 53 gives the capacitor system 10 in this state a maximum input power $Pmax$ (kW), for example, to start charging the capacitor system 10. The SOC rises as the charging continues. The inverter/converter controller 53 controls the charge input power to the capacitor system 10 such that, once the SOC reaches the upper threshold $H1$, which is lower than the upper limit $H2$, the charge input power is gradually reduced until it becomes zero kW at the same time when the SOC reaches the upper limit $H2$.

Output limitation control in discharging the capacitor system 10 will be described next.

At a point B in the drawing, the charged /discharged power of the capacitor system 10 is zero kW, and the SOC equals to the upper limit $H2$.

The inverter/converter controller 53 causes the capacitor system 10 in this state to make a maximum output power $-Pmax$ for example, to start discharging the capacitor system 10. The SOC lowers as the discharging continues. The inverter/converter controller 53 controls the discharge output power of the capacitor system 10 such that, once the SOC reaches the lower threshold $L1$, which is higher than the lower limit $L2$, the discharge output power is gradually reduced until it becomes zero kW at the same time when the SOC reaches the lower limit $L2$.

The SOC of the capacitor system 10 is calculated from the terminal voltage of the capacitor system 10 with the use of the above Expression (1).

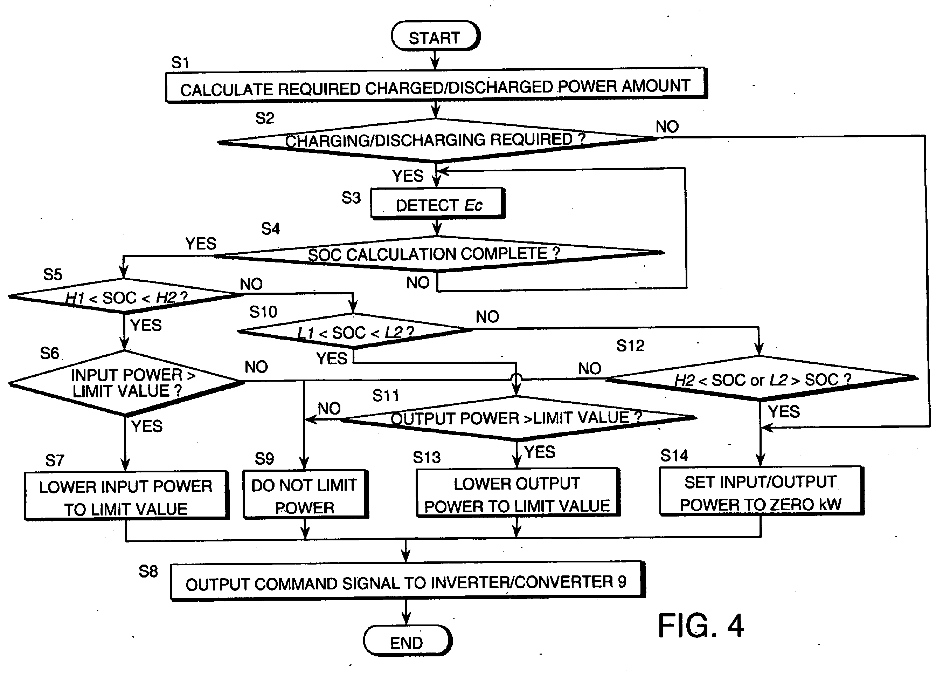

Referring to FIG. 4, a charged /discharged power limitation control routine that is executed by the inverter/converter controller 53 in order to implement the above control will be described. This routine is carried out at given time intervals, for example, at 10-millisecond intervals, while the wind power generation system is in operation.

First, in a step S1, the inverter /converter controller 53 calculates an amount of power the capacitor system 10 needs to charge or discharge to stabilize the output power of the wind power generation system based on the difference between the generated power of the wind power generator 1 and an objective generated power, as a required charged/discharged power.

In a step S2, the inverter/converter controller 53 determines from the required charged/discharged power whether or not charging or discharging of the capacitor system 10 is required. When neither charging nor discharging is required, the inverter/converter controller 53 generates in a step S 14 a command signal for turning the charged/discharged power to zero kW. In a next step S8, the inverter/converter controller 53 outputs the command signal to the inverter/converter 9 and then ends the routine.

When charging or discharging is required, the inverter/converter controller 53 detects in a step S3 a terminal voltage $Ec$ of the capacitor system 10, and calculates from the terminal voltage $Ec$ the SOC of the capacitor system 10. In a next step S4, the inverter /converter controller 53 determines whether or not the calculation of the SOC of the capacitor system 10 based on the terminal voltage $Ec$ has been completed. In a case where the SOC calculation has not been completed yet, the inverter/converter controller 53 continues the SOC calculation in the step S3.

When it is determined in the step S4 that the SOC calculation has been completed, the inverter/converter controller 53 determines in a step S5 whether or not the calculated SOC is less than the upper limit $H2$ and exceeds the upper threshold $H1$, which is lower than the upper limit $H2$.

When the determination in the step S5 is affirmative, the inverter/converter controller 53 compares in a step S6 the charge input power to the capacitor system 10 against a limit value set according to the SOC.

The limit value set according to the SOC here is a value for gradually lowering the charge input power to the capacitor system 10. As shown in FIG. 3, this limit value is set such that the charge input power to the capacitor system 10 is reduced as the SOC increases from the upper threshold $H1$ to the upper limit $H2$. The limit value is determined by correcting the charge input power at the upper threshold $H1$ downward according to the SOC. Alternatively, a limit value table may be created in advance in association with SOC values between the upper threshold $H1$ and the upper limit $H2$, so the limit value is directly obtained by searching the table with the SOC as a key.

When the charge input power to the capacitor system 10 exceeds the limit value in the step S6, there is a fear of an overcharge in which the SOC exceeds the upper limit $H2$. In this case, the inverter /converter controller 53 generates in a step S7 a command signal for lowering the charge input power to the capacitor system 10 down to the limit value. In the next step S8, the inverter/converter controller 53 outputs the command signal to the inverter/converter 9 and then ends the routine.

When the charge input power to the capacitor system 10 does not exceed the limit value in the step S6, there is no fear that the capacitor system 10 is overcharged. In this case, the inverter/converter controller 53 generates in a step S9 a command signal that does not limit the charge input/discharge output power. In the next step S8, the inverter/converter controller 53 outputs the command signal to the inverter/converter 9 and then ends the routine.

In a case where the determination in the step S5 is negative, the inverter/converter controller 53 determines in a step S10 whether or not the calculated SOC is greater than the lower limit $L2$ of the SOC and smaller than the lower threshold $L1$, which is greater than the lower limit $L2$.

When the determination in the step S10 is affirmative, the inverter/converter controller 53 compares in a step S11 the discharge output power of the capacitor system 10 against a limit value set according to the SOC. The limit value set according to the SOC is set such that the discharge output power of the capacitor system 10 is reduced as the SOC decreases from the lower threshold $L1$ to the lower limit $L2$ in FIG. 3. The limit value is determined by correcting the discharge output power at the lower threshold $L1$ downward according to the SOC. Alternatively, a limit value table may be created in advance in association with SOC values between the lower threshold $L1$ and the lower limit $L2$, so the limit value is obtained by searching the table with the SOC as a key.

When the discharge output power of the capacitor system 10 exceeds the limit value in the step S11, there is a fear of an overdischarge in which the SOC is lower than the lower limit $L2$. In this case, the inverter/converter controller 53 generates in a step S13 a command signal for lowering the discharge output power of the capacitor system 10 down to the limit value. In the next step S8, the inverter/converter controller 53 outputs the command signal to the inverter/converter 9 and then ends the routine.

When the discharge output power of the capacitor system 10 does not exceed the limit value in the step S11, there is no fear that the capacitor system 10 is overdischarged. In this case, the inverter/converter controller 53 generates in the step S9 described above a command signal that does not limit the charge input/discharge output power. In the next step S8, the inverter/converter controller 53 outputs the command signal to the inverter/converter 9 and then ends the routine.

When the determination in the step S10 is negative, the inverter /converter controller 53 determines in a step S 12 whether or not the SOC fulfills one of two conditions:

1) the SOC is greater than the upper limit $H2$; and
2) the SOC is lower than the lower limit $L2$.

When the determination in the S12 is affirmative, the inverter/converter controller 53 generates in the step S 14 described above a command signal for turning the charge input power or the discharge output power to zero kW. In the next step S8, the inverter/converter controller 53 outputs the command signal to the inverter/converter 9 and then ends the routine.

When the determination in the step S12 is negative, the SOC of the capacitor system 10 is within the range between the lower threshold $L1$ and the upper threshold $H1$. In this case, the inverter/converter controller 53 generates in the step S9 described above a command signal that does not limit the charge input/discharge output power. In the next step S8, the inverter/converter controller 53 outputs the command signal to the inverter/converter 9 and then ends the routine.

By executing the routine, the charge input power or the discharge output power is gradually lowered before the SOC of the capacitor system 10 reaches the upper limit $H2$ or the lower limit $L2$ and the charge input power or the discharge output power becomes zero at the time the SOC reaches the upper limit $H2$ or the lower limit $L2$.

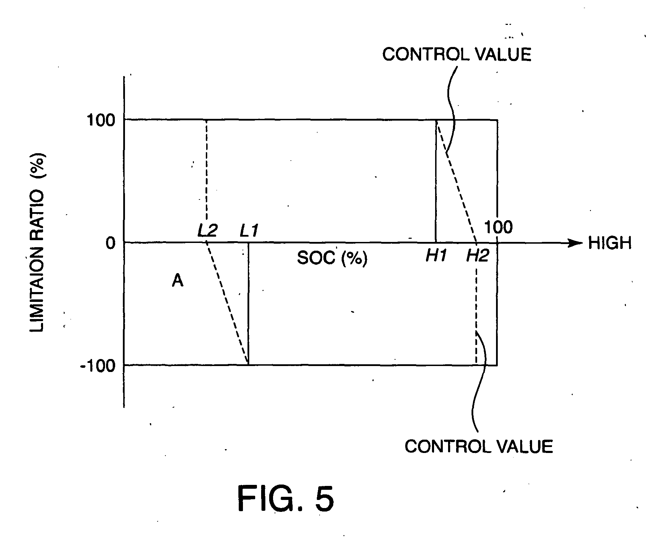

Overcharging and overdischarging of the capacitor system 10 can thus be prevented by this routine without failure. As a result, the electric double layer capacitor energy storage device containing the energy storage device 5 including the capacitor system 10, can be free of maintenance and can have a high durability. In the above description, limit values are set for the charge input power and discharge output power of the capacitor system 10 according to the SOC of the capacitor system 10. As shown in FIG. 5, the limit values may be replaced by a limitation ratio with the maximum input power $Pmax$ of the capacitor system 10 expressed as 100% and a limitation ratio with the maximum output power $-Pmax$ of the capacitor system 10 expressed as 100%.

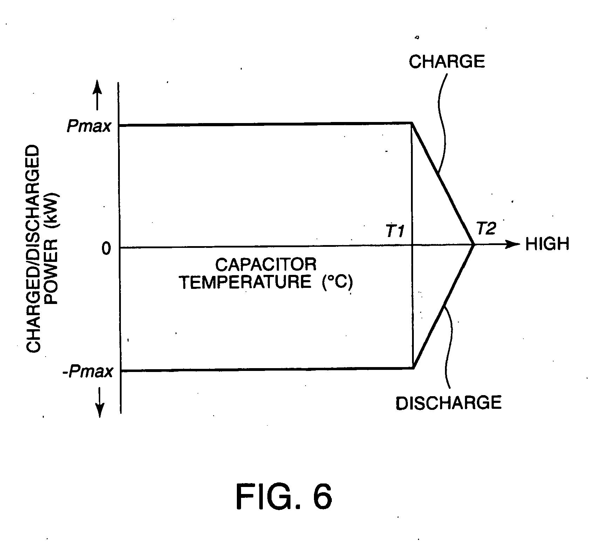

Referring to FIGs. 6-8, a second embodiment of this invention will be described.

In this embodiment, the charged/discharged power is controlled with the use of limit values with respect to the temperature of the capacitor system 10 instead of the use of limit values with respect to the SOC. For this purpose, a temperature sensor 54 shown in FIG. 2 for detecting a temperature $Tc$ (°C) of the capacitor system 10 is connected to the inverter/converter controller 53.

FIG. 6 shows that the upper limit to the temperature of the capacitor system 10 is $T2$ (°C), and a value lower than the upper limit $T2$ is set as a threshold $T1$ (°C) for output power limitation. As in FIG. 3, above a point zero on the axis of ordinate, a state in which the capacitor system 10 is receiving a charge input power, in other words, a charge state is indicated by a positive value, whereas a negative value indicates a state in which the capacitor system 10 is outputting a discharge output power, in other words, a discharge state.

This embodiment is built on characteristics of the capacitor system 10 in that the temperature $Tc$ of the capacitor system 10 rises while charging or discharging of the capacitor system 10 continues. In other words, charging and discharging are possible while the temperature of the capacitor system 10 is low, whereas there is a risk of overcharge or overdischarge when the temperature $Tc$ of the capacitor system 10 exceeds the upper limit $T2$.

When the temperature $Tc$ of the capacitor system 10 is less than the threshold $T1$, the maximum value $\pm Pmax$ of the charge input power to or the discharge output power from the capacitor system 10 is employed in charging or discharging the capacitor system 10. As charging or discharging continues, the temperature $Tc$ of the capacitor system 10 rises. The inverter/converter controller 53 controls the inverter/converter 9 such that, when the temperature $Tc$ reaches the threshold $T1$, which is lower than the upper limit $T2$, the charge input power to or the discharge output power from the capacitor system 10 is gradually reduced until the charge input power to or the discharge output power from the capacitor system 10 becomes zero kW at the same time when the temperature $Tc$ reaches $T2$.

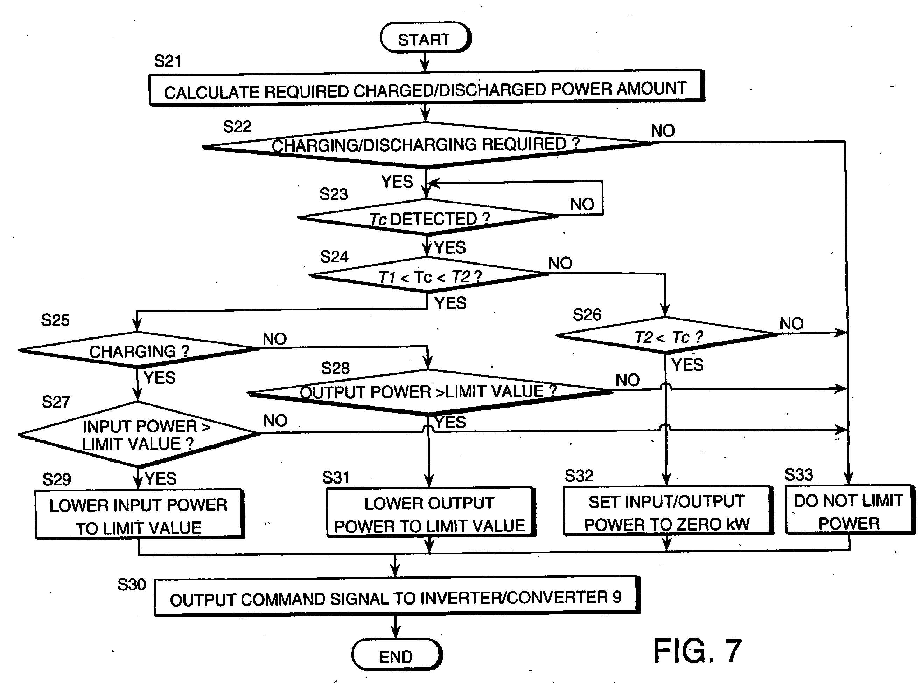

FIG. 7 shows a charged/discharged power limitation control routine that is executed by the inverter/converter controller 53 in order to implement the above control. This routine is carried out at given time intervals, for example, at 10-millisecond intervals, while the wind power generation system is in operation.

First, in a step S21, the inverter/converter controller 53 calculates an amount of power the capacitor system 10 needs to charge or discharge in order to stabilize the output power of the wind power generation system based on the difference between the generated power of the wind power generator 1 and an objective generated power, as a required charged/discharged power.

In a step 522, the inverter/converter controller 53 determines from the required charged/discharged power whether or not charging or discharging of the capacitor system 10 is required.

When neither charging nor discharging is required, the inverter/converter controller 53 generates in a step S33 a command signal that does not limit the charge input power or the discharge output power. In a next step 530, the inverter/converter controller 53 outputs the command signal to the inverter/converter 9 and then ends the routine.

When charging or discharging is required, the inverter/converter controller 53 detects in a step S23 the temperature $Tc$ of the capacitor system 10 based on a signal input from the temperature sensor 54. The inverter/converter controller 53 repeats the processing of the step S23 until the temperature $Tc$ is detected.

Detecting the temperature $Tc$ of the capacitor system 10, the inverter/converter controller 53 determines in a next step S24 whether or not the temperature $Tc$ is less than the upper limit $T2$ and exceeds the threshold $T1$, which is lower than the upper limit $T2$.

When the determination in the step S24 is affirmative, the inverter/converter controller 53 determines in a step S25 whether or not the capacitor system 10 is undergoing a charging operation. This can be determined based on the terminal voltage *Ec*.

When the capacitor system 10 is in the process of a charging operation, the inverter/converter controller 53 compares in a step S27 the charge input power to the capacitor system 10 against a limit value set according to the temperature *Tc* of the capacitor system 10.

The limit value set according to the temperature *Tc* of the capacitor system 10 is a value for gradually lowering the charge input power to the capacitor system 10. As shown in FIG. 6, this limit value is set such that the charge input power to the capacitor system 10 is reduced as the temperature *Tc* of the capacitor system 10 increases from the threshold *T1* to the upper limit *T2*. The limit value is determined by correcting the charge input power at the threshold *T1* downward according to the temperature *Tc* of the capacitor system 10. Alternatively, a limit value table may be created in advance in association with values of the temperature *Tc* of the capacitor system 10 between the threshold *T1* and the upper limit *T2*, so the limit value is directly obtained by searching the table with the temperature *Tc* of the capacitor system 10 as a key.

When the charge input power to the capacitor system 10 exceeds the limit value in the step S27, there is a fear of an overcharge in which the temperature *Tc* of the capacitor system 10 exceeds the upper limit *T2*. In this case, the inverter/converter controller 53 generates in a step S29 a command signal for lowering the charge input power to the capacitor system 10 down to the limit value. In the next step S30, the inverter/converter controller 53 outputs the command signal to the inverter/converter 9 and then ends the routine.

When the charge input power to the capacitor system 10 does not exceed the limit value in the step S27, there is no fear that the capacitor system 10 is overcharged. In this case , the inverter /converter controller 53 generates in the step S33 described above a command signal that does not limit the charged/discharged power. In the next step S30, the inverter/converter controller 53 outputs the command signal to the inverter/converter 9 and then ends the routine.

When the capacitor system 10 is not in the process of a charging operation in the step S25, it means that the capacitor system 10 is undergoing a discharging operation. In this case, the inverter/converter controller 53 compares in a step S28 the discharge output power from the capacitor system 10 against a limit value set according to the temperature *Tc* of the capacitor system 10. The limit value set according to the temperature *Tc* of the capacitor system 10 is a value for gradually lowering the discharge output power from the capacitor system 10.

As shown in FIG. 6, this limit value is set such that the discharge output power from the capacitor system 10 is reduced as the temperature *Tc* of the capacitor system 10 increases from the threshold *T1* to the upper limit *T2*. The limit value is determined by correcting the discharge output power at the threshold *T1* downward according to the temperature *Tc* of the capacitor system 10.

Alternatively, a limit value table may be created in advance in association with values of the temperature *Tc* of the capacitor system 10 between the threshold *T1* and the upper limit *T2*, so the limit value is directly obtained by searching the table with the temperature *Tc* of the capacitor system 10 as a key.

When the discharge output power from the capacitor system 10 exceeds the limit value in the step S28, there is a fear of an overdischarge in which the temperature *Tc* of the capacitor system 10 exceeds the upper limit *T2*. In this case, the inverter/converter controller 53 generates in a step S31 a command signal for lowering the discharge output power from the capacitor system 10 down to the limit value. In the next step S30, the inverter/converter controller 53 outputs the command signal to the inverter/converter 9 and then ends the routine.

When the discharge output power from the capacitor system 10 does not exceed the limit value in the step S28, there is no fear that the capacitor system 10 is overdischarged. In this case, the inverter/converter controller 53 generates in the step S33 described above a command signal that does not limit the charge input/discharge output power. In the next step S30, the inverter/converter controller 53 outputs the command signal to the inverter/converter 9 and then ends the routine.

When the determination in the S24 is negative, the inverter/converter controller 53 determines in a step S26 whether or not the temperature Tc of the capacitor system 10 exceeds the upper limit *T2*.

When the temperature *Tc* of the capacitor system 10 exceeds the upper limit *T2* in the step S26, there is a risk of overcharge or overdischarge. In this case, the inverter/converter controller 53 generates in a step S32 a command signal for turning the charge input/discharge output power to zero kW. In the next step S30, the inverter/converter controller 53 outputs the command signal to the inverter/converter 9 and then ends the routine.

When the temperature *Tc* of the capacitor system 10 does not exceed the upper limit *T2* in the step S26, it means, in conjunction with the determination in the step S24, that the temperature *Tc* of the capacitor system 10 is equal to or lower than the threshold *T1*.

In this case, the inverter/converter 9 generates in the step S33 described above a command signal that does not limit the charged/discharged power. In the next step S30, the inverter/converter controller 53 outputs the command signal to the inverter/converter 9 and then ends the routine.

By executing the routine, the charge input power or the discharge output power is gradually lowered before the temperature *Tc* of the capacitor system 10 reaches the upper limit *T2* and the charge input power or the discharge output power becomes zero kW at the time the temperature *Tc* reaches the upper limit *T2*.

Therefore, according also to this routine, overcharging or overdischarging of the capacitor system 10 is prevented without failure.

In this embodiment, limit values are set for the charge input power and discharge output power of the capacitor system 10 according to the temperature $Tc$ of the capacitor system 10.

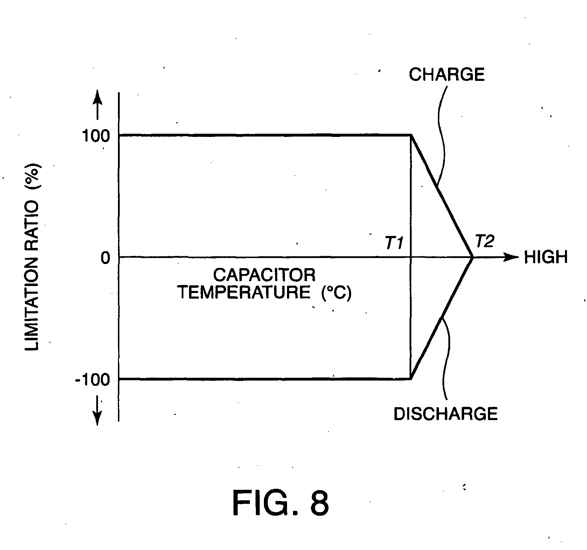

Referring to FIG. 8, the limit values may be replaced by a limitation ratio with respect to the maximum input power $Pmax$ of the capacitor system 10 expressed as 100% and a limitation ratio with respect to the maximum output power $-Pmax$ of the capacitor system 10 expressed as 100%.

The limit value calculation according to the first embodiment and the limit value calculation according to the second embodiment may both be executed, and a smaller limit value of the two calculation results may be employed. Calculating the limit value by two different methods in this manner improves the precision of charge input/discharge output power limitation control.

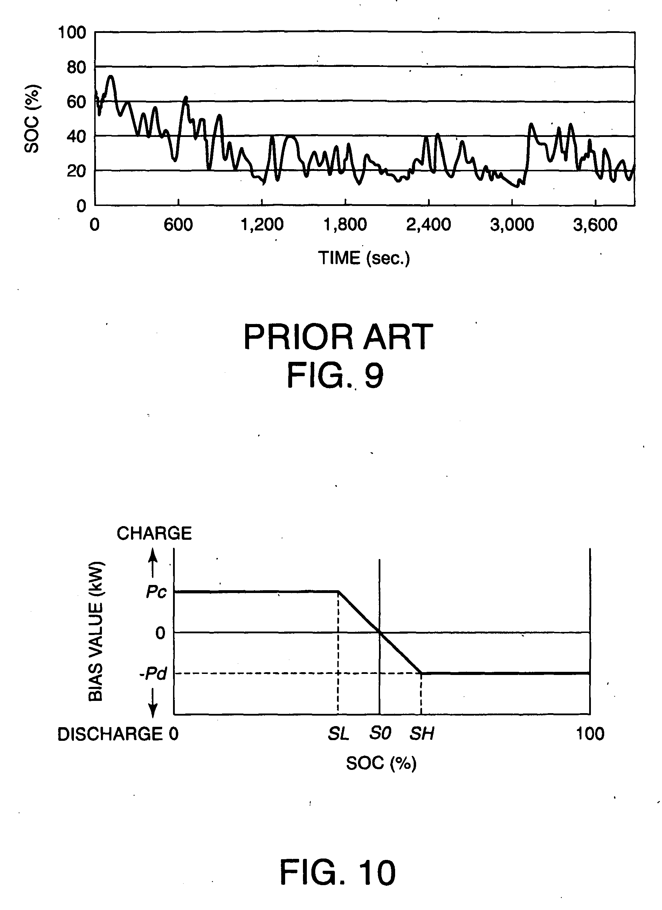

Referring to FIGs. 9-11, a third embodiment of this invention will be described.

The first and second embodiments make the energy storage device 5 which has the capacitor system 10 free of maintenance and prolong the lifetime of the energy storage device 5 by executing charge input power limitation control and discharge output power limitation control.

On the other hand, the power stabilizing performance of the energy storage device 5 can be improved by efficiently utilizing the storage capacity of the capacitor system 10 and thus increasing the charge input power or discharge output power of the capacitor system 10.

The third embodiment relates to bias control of the energy storage device 5 to raise a mean SOC in order to fully utilize the storage capacity of the capacitor system 10.

FIG. 9 shows the relation between a. running time of the capacitor system 10 and the SOC of the capacitor system 10 without bias control. As shown in the figure, the SOC lowers as the running time becomes longer, and the SOC fluctuates around 20%. A cause of this is a great power loss in charging resulting from a loss in charging the capacitor system 10 and a loss in making an input power to and output power from the inverter/converter 9. When only 20% of the storage capacity of the capacitor system 10 is used as in the case of this example, the SOC frequently reaches its lower limit $L2$ described in the first embodiment and the probability of the discharge output power being limited becomes accordingly higher. As a result, not enough effect of stabilization control is obtained.

In this embodiment, a given bias output (kW) is added to or subtracted from a charge input power and a discharge output power that are required for power stabilization so that the SOC of the capacitor system 10 can be kept at a given higher level.

FIG. 10 shows that, in this embodiment, a bias value $Pc$ for charging is added to the charge input power when the SOC value is less than a threshold $SL$ whereas a bias value $-Pd$ for discharging is added to the discharge output power when the SOC value exceeds a threshold $SH$.

When the SOC is within a given range between $SL$ and $SH$ which includes a median value $S0$, the bias value is set according to the difference between the SOC and the median value $S0$. When the SOC is outside this range, the bias value is set to the fixed value $Pc$ or $-Pd$.

However, the bias value is not limited to those characteristics and various other settings can be employed to reach the median value $S0$. The fixed values $Pc$ and $-Pd$ are set to appropriate values that make the SOC converge to the median value $S0$ without impairing the power stabilization effect.

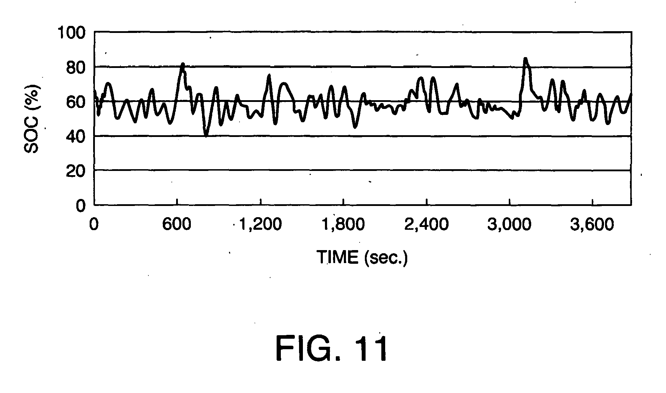

Setting the bias value according to the SOC of the capacitor system 10 in this manner makes the SOC readily converge to the median value $S0$ as shown in FIG. 11. Herein, the median value $S0$ is set equal to 60% of the storage capacity of the capacitor system 10. A bias value required for a corrective shift from the state of FIG. 9 to the state of FIG. 11 is the bias value $Pc$ of the charge input alone, and the setting of the bias value $-Pd$ of the discharge output power is irrelevant to this shift. As opposed to FIG. 9, in a case where the SOC fluctuates around a value larger than the median value $S0$, the bias value $-Pd$ of the discharge output power is used to correct this tendency. The setting of the bias value $Pc$ of the charge input power is irrelevant to this fluctuation correction.

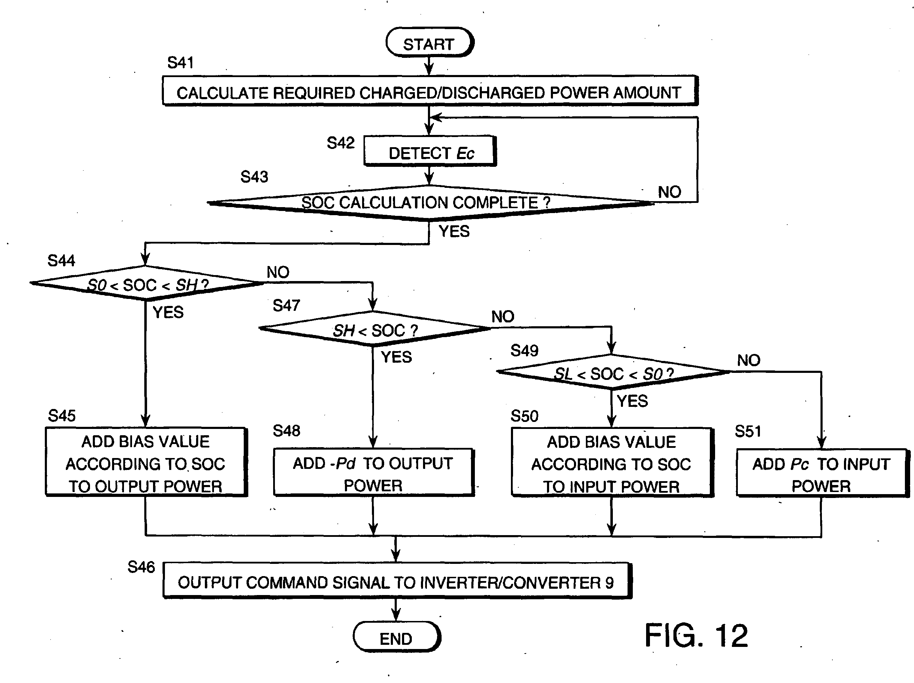

FIG. 12 shows a bias control routine that is executed by the inverter/converter controller 53 in order to implement the bias control described above. This routine is carried out at given time intervals, for example, at 10-millisecond intervals, while the wind power generation system is in operation.

First, in a step S41, the inverter/converter controller 53 calculates an amount of power the capacitor system 10 needs to charge or discharge to stabilize the output power of the wind power generation system based on the difference between the generated power of the wind power generator 1 and an objective generated power, as a required charged/discharged power.

In a next step S42, the inverter/converter controller 53 detects the terminal voltage $Ec$ of the capacitor system 10, and calculates the SOC of the capacitor system 10 from the terminal voltage $Ec$.

Although the detection of the terminal voltage $Ec$ of the capacitor system 10 is performed in every occasion when the routine is performed, the calculation of the SOC of the capacitor system 10 based on the detected terminal voltage $Ec$ is preferably performed by applying smoothing processing, e.g. first order delay processing, in order to eliminate an effect of fluctuation in the terminal voltage $Ec$.

In a next step S43, the inverter /converter controller 53 determines whether the calculation of the SOC of the capacitor system 10 based on the terminal voltage $Ec$ has been completed or not. In a case where the SOC calculation has not been completed yet, the inverter/converter controller 53 continues the SOC calculation in the step S43.

Determining in the step S43 that the SOC calculation has been completed, the inverter/converter controller 53 determines in a step S44 whether or not the calculated SOC is within a range between the median value $S0$ and the upper limit $SH$ of the given range.

When the determination in the step S44 is affirmative, the inverter/converter controller 53 sets in a step S45 a bias value according to the SOC so that the bias value has the variation characteristics shown in FIG. 10. In addition, the inverter/converter controller 53 adds the set bias value to the discharge output power, and generates a command signal corresponding to the result of the addition.

It should be noted however that this calculation is performed only when the capacitor system 10 is discharging power, or in other words, when the required charged/discharged power calculated in the step S41 corresponds to a discharged power. When on the other hand the required charged/discharged power calculated in the step S41 corresponds to a charged power, the calculation of the discharge output power is omitted and the command signal is generated according to the requested charged power without correction.

In a next step S46, the inverter/converter controller 53 outputs the command signal to the inverter/converter 9 and then ends the routine.

The bias value is added to the discharge output power in the calculation in the step S45 where the discharge output power is expressed as a negative charge input power as can be seen in FIG. 3. The bias value is also expressed as a negative value as shown in FIG. 10 when the SOC exceeds the median value $S0$. Substantially the same result is obtained by another calculation method in which the bias value is calculated as an absolute value and the bias value is subtracted from a negative charge input power.

When the determination in the step S44 is negative, the inverter/converter controller 53 determines in a step S47 whether or not the SOC exceeds the upper limit $SH$ of the given range.

When the SOC exceeds the upper limit $SH$ of the given range in the step S47, the inverter/converter controller 53 adds in a step S48 the bias value $-Pd$ shown in FIG. 10 to the discharge output power expressed as a negative value, and generates a command signal corresponding to the result of the addition.

It should also be noted however that this calculation is performed only when the capacitor system 10 is discharging power, or in other words, when the required charged/discharged power calculated in the step S41 corresponds to a discharged power. When on the other hand the required charged/discharged power calculated in the step S41 corresponds to a charged power, the calculation of the discharge output power is omitted and the command signal is generated according to the requested charged power without correction.

In the next step S46, the inverter/converter controller 53 outputs the command signal to the inverter/converter 9 and then ends the routine.

With respect to the calculation in the step S48 also, as in the case of the calculation in the step S45, the same result is obtained by subtracting an absolute bias value $Pd$ from a negative charge input power.

When the SOC does not exceed the upper limit $SH$ of the given range in the step S47, the inverter/converter controller 53 determines in a step S49 whether or not the SOC is within a range between the lower limit $SL$ of the given range and the median value $S0$.

When the determination in the step. S49 is affirmative, the inverter/converter controller 53 sets in a step S50 the bias value according to the SOC so that the bias value has the variation characteristics shown in FIG. 10. The inverter/converter controller 53 adds the set bias value to the charge input, and generates a command signal corresponding to the result of the addition.

It should be noted however that this calculation is performed only when the capacitor system 10 is charging power, or in other words, when the required charged/discharged power calculated in the step S41 corresponds to a charged power. When on the other hand the required charged/discharged power calculated in the step S41 corresponds to a discharged power, the calculation of the charge input power is omitted and the command signal is generated according to the requested discharged power without correction.

In the next step S46, the inverter/converter controller 53 outputs the command signal to the inverter/converter 9 and then ends the routine.

Again, substantially the same calculation result that is obtained through the calculation in the step S50 is obtained by another calculation method, for example, the discharge output power is expressed as a positive value and the charge input power is regarded as a negative discharge output power from which the bias value expressed as an absolute value is subtracted.

When the determination in the step S49 is negative, it means that the SOC is less than the lower limit $SL$ of the given range.

In this case, the inverter/converter controller 53 adds in a step S51 the bias value $Pc$ shown in FIG. 10 to the charge input power, and generates a command signal corresponding to the result of the addition.

It should also be noted however that this calculation is performed only when the capacitor system 10 is charging power, or in other words, when the required charged/discharged power calculated in the step S41 corresponds to a charged power. When on the other hand the required charged/discharged power calculated in the step S41 corresponds to a discharged power, the calculation of the charge input power is omitted and the command signal is generated according to the requested discharged power without correction.

In the next step S46, the inverter/converter controller 53 outputs the command signal to the inverter/converter 9 and then ends the routine.

Again, substantially the same calculation result that is obtained through the calculation in the step S52 is obtained by another calculation method, for example, the discharge output is expressed as a positive value and the charge input power is regarded as a negative discharge output power from which the bias value ($Pc$) expressed as an absolute value is subtracted.

According to this embodiment, the SOC of the capacitor system 10 can be converged to the favorable median value $S0$ by utilizing the capacitors' characteristics in that the SOC is detected from the voltage with precision and applying a bias value in charging or discharging of the capacitor system 10. As a result, the power loss is compensated and the capacity for the charge input power and the discharge output power is substantially enlarged, thereby improving the performance of the energy storage device 5 in stabilizing the power of the wind power generation system.

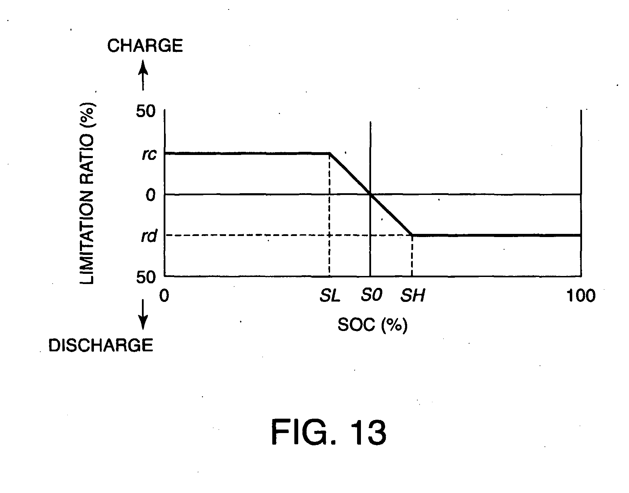

The bias power is set according to the SOC in this embodiment. An effect similar to when the bias power is employed is obtained by setting a bias ratio as shown in FIG. 13, instead of the bias power, and multiplying the charge input power of the capacitor system 10 and the discharge output power of the capacitor system 10 each by the bias ratio.

The contents of Tokugan 2005-305764, with a filing date of October 20, 2005, are hereby incorporated by reference.

Although the invention has been described above with reference to certain embodiments of the invention, the invention is not limited to the embodiments described above. Modifications and variations of the embodiments described above will occur to those skilled in the art, within the scope of the claims.

For instance, other capacitors than electric double layer capacitors can be used for the capacitor system 10.

While the above embodiments apply this invention to the energy storage device 5 which is used in combination with a wind power generation system, this invention is also applicable to energy storage devices that are used in combination with other types of system.

This invention is applicable to any energy storage device with a capacitor that executes control as claimed by using a parameter, independent of how the parameter used for the control is obtained.

INDUSTRIAL FIELD OF APPLICATION

An energy storage device according to this invention can be used in, in addition to wind power generation facilities, capacitor systems for hybrid trains, hybrid industrial vehicles, emergency power supplies for telephone switching stations which have conventionally been constructed from lead batteries, and the like.

The embodiments of this invention in which an exclusive property or privilege is claimed are defined as follows:

**Claims**

1. An energy storage device (5) for stabilizing the output of a generator (1) connected to the energy storage device (5), the energy storage device (5) comprising:

   a capacitor system (10) comprising a number of stacked capacitors;
   an inverter/converter (9) for selectively controlling charging and discharging of the capacitor system (10); and
   a programmable controller (53) programmed to:

   cause the inverter/converter (9), when an output power of the generator (1) exceeds an objective level, to charge the capacitor system (10) with a power corresponding to a difference between the output power of the generator (1) and the objective level; and
   cause the inverter/converter (9), when the output power of the generator (1) is lower than the objective level, to make the capacitor system (10) discharge power corresponding to a difference between the output power of the generator (1) and the objective level (S8, S30, S46);
   **characterized in that**

   the programmable controller (53) is further programmed to:

determine a parameter representing a charging/discharging condition of the capacitor system (10) (S3, S23);
cause the inverter/converter (9), when the parameter becomes higher than an upper threshold that is set smaller than an upper limit value, to make a charged power of the capacitor system (10) decrease as the parameter approaches the upper limit value and equal zero when the parameter reaches the upper limit value (S5 - S7, S27, S29); and
cause the inverter/converter (9), when the parameter becomes lower than a lower threshold that is set greater than a lower limit value, to make a discharged power of the capacitor system (10) decrease as the parameter approaches the lower limit value and equal zero when the parameter reaches the lower limit value (S10, S11, S13, S28, S31).

2. The energy storage device (5) as defined in claim 1, **characterized in that** the parameter is a state of charge (SOC) of the capacitor system (10).

3. The energy storage device (5) as defined in claim 2, **characterized in that** the programmable controller (53) is further programmed to calculate the state of charge (SOC) of the capacitor system (10) based on a terminal voltage (Ec) of the capacitor system (10) which is detected by the inverter/converter (9) (S3).

4. The energy storage device (5) as defined in claim 1, **characterized in that** the parameter is a temperature (Tc) of the capacitor system (10).

5. A control method for stabilizing the output of a generator (1) connected to an energy storage device (5), wherein the energy storage device (5) comprising a capacitor system (10) comprising a number of stacked capacitors, and an inverter/converter (9) for selectively controlling charging and discharging of the capacitor system (10), the method comprising the following steps performed by the energy storage device (5):

causing the inverter/converter (9), when an output power of the generator (1) exceeds an objective level, to charge the capacitor system (10) with a power corresponding to a difference between the output power of the generator (1) and the objective level; and
causing the inverter/converter (9), when the output power of the generator (1) is lower than the objective level, to make the capacitor system (10) discharge power corresponding to a difference between the output power of the generator (1) and the objective level (S8, S30, S46);
**characterized by**
determining a parameter representing a charging/discharging condition of the capacitor system (10) (S3, S23);
causing the inverter/converter (9), when the parameter becomes higher than an upper threshold that is set smaller than an upper limit value, to make a charged power of the capacitor system (10) decrease as the parameter approaches the upper limit value and equal zero when the parameter reaches the upper limit value (S5 - S7, S27, S29); and
causing the inverter/converter (9), when the parameter becomes lower than a lower threshold that is set greater than a lower limit value, to make a discharged power of the capacitor system (10) decrease as the parameter approaches the lower limit value and equal zero when the parameter reaches the lower limit value (S10, S11, S13, S28, S31).

6. An energy storage device (5) for stabilizing an output power of a generator (1) connected to the energy storage device (5), the energy storage device (5) comprising:

a capacitor system (10) comprising a number of stacked capacitors;
an inverter/converter (9) for selectively controlling charging and discharging of the capacitor system (10); and
a programmable controller (53) programmed to:

cause the inverter/converter (9), when the output power of the generator (1) exceeds an objective level, to charge the capacitor system (10) with a power corresponding to a difference between the output power of the generator (1) and the objective level; and
cause the inverter/ converter (9), when the output power of the generator (1) is lower than the objective level, to cause the capacitor system (10) to discharge power corresponding to a difference between the output power of the generator (1) and the objective level (S46);
**characterized in that**

the programmable controller (53) is further programmed to:

determine a state of charge (SOC) of the capacitor system (10) (S42);
cause the inverter/converter (9), when the state of charge (SOC) is higher than a median value (S0), to cause the capacitor system to increase the discharged power by adding a first bias value (S44, S45, S47, S48); and
cause the inverter/converter (9), when the state of charge (SOC) is lower than the median value (S0), to cause the capacitor system (10) to increase the charged power of the capacitor system (10) by adding a second bias value (S49, S50, S51).

7. The energy storage device as defined in claim 6, **characterized in that** the programmable controller (53) is further programmed to increase the first bias value as a difference between the state of charge (SOC) and the median value (S0) increases (S45), and set the first bias value to a fixed value (Pc) when the difference between the state of charge (SOC) and the median value (S0) is equal to or greater than a given value (S48), and to increase the second bias value as a difference between the state of charge (SOC) and the median value (S0) increases (S50), and set the second bias value to a fixed value (-Pd) when the difference between the state of charge (SOC) and the median value (S0) is equal to or larger than the given value (S51).

8. The energy storage device as defined in claim 6 or claim 7, **characterized in that** the programmable controller (53) is further programmed to determine the state of charge (SOC) of the capacitor system (10) from a terminal voltage (Ec) of the capacitor system (10) by applying smooth processing on values corresponding to detected terminal voltages (Ec) of the capacitor system (10).

9. A control method for stabilizing an output power of a generator (1) connected to an energy storage device (5), wherein the energy storage device (5) comprising a capacitor system (10) comprising a number of stacked capacitors and an inverter/converter (9) for selectively controlling charging and discharging of the capacitor system (10), the method comprising the following steps performed by the energy storage device (5):

causing the inverter/converter (9), when the output power of the generator (1) exceeds an objective level, to charge the capacitor system (10) with a power corresponding to a difference between the output power of the generator (1) and the objective level; and
causing the inverter/ converter (9), when the output power of the generator (1) is lower than the objective level, to cause the capacitor system (10) to discharge power corresponding to a difference between the output power of the generator (1) and the objective level (S46);
**characterized by**
determining a state of charge (SOC) of the capacitor system (10) (S42);
causing the inverter/converter (9), when the state of charge (SOC) is higher than a median value (S0), to cause the capacitor system to increase the discharged power by adding a first bias value (S44, S45, S47, S48); and
causing the inverter/converter (9), when the state of charge (SOC) is lower than the median value (S0), to cause the capacitor system (10) to increase the charged power of the capacitor system (10) by adding a second bias value (S49, S50, S51).

**Patentansprüche**

1. Energiespeichervorrichtung (5) zum Stabilisieren des Ausgangs eines Generators (1), der mit der Energiespeichervorrichtung (5) verbunden ist, wobei die Energiespeichervorrichtung (5) umfasst:

ein Kondensatorsystem (10), das eine Anzahl geschichteter Kondensatoren umfasst;
einen Inverter/Konverter (9) zum selektiven Steuern von Laden und Entladen des Kondensatorsystems (10); und
eine programmierbare Steuereinrichtung (53), die programmiert ist,
zu veranlassen, dass der Inverter/Konverter (9), wenn ein Ausgangsstrom des Generators (1) einen Zielpegel übersteigt, das Kondensatorsystem (10) mit einem Strom lädt, der einer Differenz zwischen dem Ausgangsstrom des Generators (1) und dem Zielpegel entspricht; und
zu veranlassen, dass der Inverter/Konverter (9), wenn der Ausgangsstrom des Generators (1) niedriger als der Zielpegel ist, bewirkt, dass das Kondensatorsystem (10) Strom abgibt, der einer Differenz zwischen dem Ausgangsstrom des Generators (1) und dem Zielpegel entspricht (S8, S30, S46);
**dadurch gekennzeichnet, dass**
die programmierbare Steuereinrichtung (53) ferner programmiert ist,
einen Parameter zu bestimmen, der einen Lade-/Entladezustand des Kondensatorsystems (10) darstellt (S3, S23);

zu veranlassen, dass der Inverter/Konverter (9), wenn der Parameter höher wird als ein oberer Schwellenwert, der kleiner eingestellt ist als ein oberer Grenzwert, bewirkt, dass ein Ladestrom des Kondensatorsystems (10) abnimmt, wenn sich der Parameter dem oberen Grenzwert nähert, und gleich Null ist, wenn der Parameter den oberen Grenzwert erreicht (S5- S7, S27, S29); und

zu veranlassen, dass der Inverter/Konverter (9), wenn der Parameter niedriger wird als ein unterer Schwellenwert, der größer eingestellt ist als ein unterer Grenzwert, bewirkt, dass ein Entladestrom des Kondensatorsystems (10) abnimmt, wenn sich der Parameter dem unteren Grenzwert nähert, und gleich Null ist, wenn der Parameter den unteren Grenzwert erreicht (S10, S11, S13, S28, S31).

2.  Energiespeichervorrichtung (5) nach Anspruch 1, **dadurch gekennzeichnet, dass** der Parameter ein Ladezustand (SOC) des Kondensatorsystems (10) ist.

3.  Energiespeichervorrichtung (5) nach Anspruch 2, **dadurch gekennzeichnet, dass** die programmierbare Steuereinrichtung (53) ferner programmiert ist, den Ladezustand (SOC) des Kondensatorsystems (10) auf Basis einer Endspannung (Ec) des Kondensatorsystems (10) zu berechnen, die durch den Inverter/Konverter (9) erfasst wird (S3).

4.  Energiespeichervorrichtung (5) nach Anspruch 1, **dadurch gekennzeichnet, dass** der Parameter eine Temperatur (Tc) des Kondensatorsystems (10) ist.

5.  Steuerverfahren zum Stabilisieren des Ausgangs eines Generators (1), der mit einer Energiespeichervorrichtung (5) verbunden ist, wobei die Energiespeichervorrichtung (5) ein Kondensatorsystem (10) mit einer Anzahl geschichteter Kondensatoren sowie einen Inverter/Konverter (9) zum selektiven Steuern von Laden und Entladen des Kondensatorsystems (10) umfasst, wobei das Verfahren die folgenden, durch die Energiespeichervorrichtung (5) durchgeführten Schritte umfasst:

    Veranlassen, dass der Inverter/Konverter (9), wenn ein Ausgangsstrom des Generators (1) einen Zielpegel übersteigt, das Kondensatorsystem (10) mit einem Strom lädt, der einer Differenz zwischen dem Ausgangsstrom des Generators (1) und dem Zielpegel entspricht; und
    Veranlassen, dass der Inverter/Konverter (9), wenn der Ausgangsstrom des Generators (1) niedriger als der Zielpegel ist, bewirkt, dass das Kondensatorsystem (10)
    Strom abgibt, der einer Differenz zwischen dem Ausgangsstrom des Generators (1) und dem Zielpegel entspricht (S8, S30, S46);
    **gekennzeichnet durch**
    Bestimmen eines Parameters, der einen Lade-/Entladezustand des Kondensatorsystems (10) darstellt (S3, S23);
    Veranlassen, dass der Inverter/Konverter (9), wenn der Parameter höher wird als ein oberer Schwellenwert, der kleiner eingestellt ist als ein oberer Grenzwert, bewirkt, dass ein Ladestrom des Kondensatorsystems (10) abnimmt, wenn sich der Parameter dem oberen Grenzwert nähert, und gleich Null ist, wenn der Parameter den oberen Grenzwert erreicht (S5 - S7, S27, S29); und
    Veranlassen, dass der Inverter/Konverter (9), wenn der Parameter niedriger wird als ein unterer Schwellenwert, der größer eingestellt ist als ein unterer Grenzwert, bewirkt, dass ein Entladestrom des Kondensatorsystems (10) abnimmt, wenn sich der Parameter dem unteren Grenzwert nähert, und gleich Null ist, wenn der Parameter den unteren Grenzwert erreicht (S10, S11, S13, S28, S31).

6.  Energiespeichervorrichtung (5) zum Stabilisieren des Ausgangs eines Generators (1), der mit der Energiespeichervorrichtung (5) verbunden ist, wobei die Energiespeichervorrichtung (5) umfasst:

    ein Kondensatorsystem (10), das eine Anzahl geschichteter Kondensatoren umfasst;
    einen Inverter/Konverter (9) zum selektiven Steuern von Laden und Entladen des Kondensatorsystems (10); und
    eine programmierbare Steuereinrichtung (53), die programmiert ist,
    zu veranlassen, dass der Inverter/Konverter (9), wenn der Ausgangsstrom des Generators (1) einen Zielpegel übersteigt, das Kondensatorsystem (10) mit einem Strom lädt, der einer Differenz zwischen dem Ausgangsstrom des Generators (1) und dem Zielpegel entspricht; und
    zu veranlassen, dass der Inverter/Konverter (9), wenn der Ausgangsstrom des Generators (1) niedriger als der Zielpegel ist, bewirkt, dass das Kondensatorsystem (10) einen Strom abgibt, der einer Differenz zwischen dem Ausgangsstrom des Generators (1) und dem Zielpegel entspricht (S46);

**dadurch gekennzeichnet, dass**

die programmierbare Steuereinrichtung (53) ferner programmiert ist,

einen Ladezustand (SOC) des Kondensatorsystems (10) zu bestimmen (S42);

zu veranlassen, dass der Inverter/Konverter (9), wenn der Ladezustand (SOC) höher als ein Mittelwert (S0) ist, das Kondensatorsystem veranlasst, den Entladestrom durch Addieren eines ersten Vorspannungswertes zu erhöhen (S44, S45, S47, S48); und

zu veranlassen, dass der Inverter/Konverter (9), wenn der Ladezustand (SOC) niedriger als der Mittelwert (S0) ist, das Kondensatorsystem (10) veranlasst, den Ladestrom des Kondensatorsystems (10) durch Addieren eines zweiten Vorspannungswertes zu erhöhen (S49, S50, S51).

7. Energiespeichervorrichtung nach Anspruch 6, **dadurch gekennzeichnet, dass** die programmierbare Steuereinrichtung (53) ferner programmiert ist, den ersten Vorspannungswert zu erhöhen, wenn eine Differenz zwischen dem Ladezustand (SOC) und dem Mittelwert (S0) zunimmt (S45), und den ersten Vorspannungswert auf einen festen Wert (Pc) festzulegen, wenn die Differenz zwischen dem Ladezustand (SOC) und dem Mittelwert (S0) gleich oder größer als ein gegebener Wert (S48) ist, und den zweiten Vorspannungswert zu erhöhen, wenn eine Differenz zwischen dem Ladezustand (SOC) und dem Mittelwert (S0) zunimmt (S50), und den zweiten Vorspannungswert auf einen festen Wert (-Pd) festzulegen, wenn die Differenz zwischen dem Ladezustand (SOC) und dem Mittelwert (SO) gleich oder größer als der gegebene Wert (S51) ist.

8. Energiespeichervorrichtung nach Anspruch 6 oder Anspruch 7, **dadurch gekennzeichnet, dass** die programmierbare Steuereinrichtung (53) ferner programmiert ist, den Ladezustand (SOC) des Kondensatorsystems (10) aus einer Endspannung (Ec) des Kondensatorsystems (10) zu bestimmen, indem sie Glättbearbeitung an Werten durchführt, die erfassten Endspannungen (Ec) des Kondensatorsystems (10) entsprechen.

9. Steuerverfahren zum Stabilisieren eines Ausgangsstroms eines Generators (1), der mit einer Energiespeichervorrichtung (5) verbunden ist, wobei die Energiespeichervorrichtung (5) ein Kondensatorsystem (10) mit einer Anzahl geschichteter Kondensatoren sowie einen Inverter/Konverter (9) zum selektiven Steuern von Laden und Entladen des Kondensatorsystems umfasst, wobei das Verfahren die folgenden, durch die Energiespeichervorrichtung (5) durchgeführten Schritte umfasst:

Veranlassen, dass der Inverter/Konverter (9), wenn ein Ausgangsstrom des Generators (1) einen Zielpegel übersteigt, das Kondensatorsystem (10) mit einem Strom lädt, der einer Differenz zwischen dem Ausgangsstrom des Generators (1) und dem Zielpegel entspricht; und

Veranlassen, dass der Inverter/Konverter (9), wenn der Ausgangsstrom des Generators (1) niedriger als der Zielpegel ist, bewirkt, dass das Kondensatorsystem (10) einen Strom abgibt, der einer Differenz zwischen dem Ausgangsstrom des Generators (1) und dem Zielpegel entspricht (S46);

**gekennzeichnet durch**

Bestimmen eines Ladezustandes (SOC) des Kondensatorsystems (10) (S42);

Veranlassen, dass der Inverter/Konverter (9), wenn der Ladezustand (SOC) höher als ein Mittelwert (S0) ist, das Kondensatorsystem veranlasst, den Entladestrom **durch** Addieren eines ersten Vorspannungswertes zu erhöhen (S44, S45, S47, S48); und

Veranlassen, dass der Inverter/Konverter (9), wenn der Ladezustand (SOC) niedriger als der Mittelwert (S0) ist, das Kondensatorsystem (10) veranlasst, den Ladestrom des Kondensatorsystems (10) **durch** Addieren eines zweiten Vorspannungswertes zu erhöhen (S49, S50, S51).

**Revendications**

1. Dispositif de stockage d'énergie (5) pour stabiliser la sortie d'un générateur (1) connecté au dispositif de stockage d'énergie (5), le dispositif de stockage d'énergie (5) comprenant :

un système de condensateurs (10) comprenant un certain nombre de condensateurs empilés ;

un onduleur / convertisseur (9) pour commander de manière sélective la charge et la décharge du système de condensateurs (10) ; et

un contrôleur programmable (53) programmé pour :

amener L'onduleur / convertisseur (9), lorsqu'une puissance de sortie du générateur (1) dépasse un niveau cible, à charger le système de condensateurs (10) avec une puissance correspondant à une différence entre la puissance de sortie du générateur (1) et le niveau cible ; et

amener L'onduleur / convertisseur (9), lorsque la puissance de sortie du générateur (1) est inférieure au niveau cible, à faire en sorte que le système de condensateurs (10) décharge une puissance correspondant à une différence entre la puissance de sortie du générateur (1) et le niveau cible (S8, S30, S46) ;
**caractérisé en ce que**

Le contrôleur programmable (53) est en outre programmé pour :

déterminer un paramètre représentant une condition de charge / décharge du système de condensateurs (10) (S3, S23) ;

amener l'onduleur / convertisseur (9), lorsque le paramètre devient supérieur à un seuil supérieur qui est fixé de manière à être inférieur à une valeur limite supérieure, à faire en sorte que la puissance chargée du système de condensateurs (10) diminue alors que le paramètre se rapproche de la valeur limite supérieure et soit égale à zéro lorsque le paramètre atteint la valeur limite supérieure (S5 - S7, S27, S29) ; et

amener l'onduleur / convertisseur (9), lorsque le paramètre devient inférieur à un seuil inférieur qui est fixé de manière à être supérieur à une valeur limite inférieure, à faire en sorte qu'une puissance déchargée du système de condensateurs (10) diminue alors que le paramètre se rapproche de la valeur limite inférieure et soit égale à zéro lorsque le paramètre atteint la valeur limite inférieure (S10, S11, S13, S28, S31).

2. Dispositif de stockage d'énergie (5) selon la revendication 1, **caractérisé en ce que** le paramètre est un état de charge (SOC) du système de condensateurs (10).

3. Dispositif de stockage d'énergie (5) selon la revendication 2, **caractérisé en ce que** le contrôleur programmable (53) est en outre programmé pour calculer l'état de charge (SOC) du système de condensateurs (10) sur la base d'une tension de bornes (Ec) du système de condensateurs (10) qui est détectée par l'onduleur / convertisseur (9) (S3).

4. Dispositif de stockage d'énergie (5) selon la revendication 1, **caractérisé en ce que** le paramètre est une température (Tc) du système de condensateurs (10).

5. Procédé de commande pour stabiliser la sortie d'un générateur (1) connecté à un dispositif de stockage d'énergie (5), dans lequel le dispositif de stockage d'énergie (5) comprend un système de condensateurs (10) comprenant un certain nombre de condensateurs empilés, et un onduleur / convertisseur (9) pour commander de manière sélective la charge et la décharge du système de condensateurs (10), le procédé comprenant les étapes suivantes effectuées par le dispositif de stockage d'énergie (5) consistant à :

amener l'onduleur / convertisseur (9), lorsqu'une puissance de sortie du générateur (1) dépasse un niveau cible, à charger le système de condensateurs (10) avec une puissance correspondant à une différence entre la puissance de sortie du générateur (1) et le niveau cible ; et

amener l'onduleur / convertisseur (9), lorsque la puissance de sortie du générateur (1) est inférieure au niveau cible, à faire en sorte que le système de condensateurs (10) décharge une puissance correspondant à une différence entre la puissance de sortie du générateur (1) et le niveau cible (S8, S30, S46);
**caractérisé par** les étapes consistant à :

déterminer un paramètre représentant une condition de charge / décharge du système de condensateurs (10) (S3, S23) ;

amener l'onduleur / convertisseur (9), lorsque le paramètre devient supérieur à un seuil supérieur qui est fixé de manière à être inférieur à une valeur limite supérieure, à faire en sorte qu'une puissance chargée du système de condensateurs (10) diminue alors que le paramètre se rapproche de la valeur limite supérieure et soit égale à zéro lorsque le paramètre atteint la valeur limite supérieure (S5 - S7, S27, S29) ; et

amener l'onduleur / convertisseur (9), lorsque le paramètre devient inférieur à un seuil inférieur qui est fixé de manière à être supérieur à une valeur limite inférieure, à faire en sorte qu'une puissance déchargée du système de condensateurs (10) diminue alors que le paramètre se rapproche de la valeur limite inférieure et soit égale à zéro lorsque le paramètre atteint la valeur limite inférieure (S10, 511, S13, S28, S31).

6. Dispositif de stockage d'énergie (5) pour stabiliser une puissance de sortie d'un générateur (1) connecté au dispositif de stockage d'énergie (5), le dispositif de stockage d'énergie (5) comprenant :

un système de condensateurs (10) comprenant un certain nombre de condensateurs empilés ;
un onduleur / convertisseur (9) pour commander de manière sélective la charge et la décharge du système de condensateurs (10) ; et
un contrôleur programmable (53) programmé pour :

amener l'onduleur / convertisseur (9), lorsque la puissance de sortie du générateur (1) dépasse un niveau cible, à charger le système de condensateurs (10) avec une puissance correspondant à une différence entre la puissance de sortie du générateur (1) et le niveau cible ; et
amener l'onduleur / convertisseur (9), lorsque la puissance de sortie du générateur (1) est inférieure au niveau cible, à faire en sorte que le système de condensateurs (10) décharge une puissance correspondant à une différence entre la puissance de sortie du générateur (1) et le niveau cible (S46) ;
**caractérisé en ce que**

le contrôleur programmable (53) est en outre programmé pour :

déterminer un état de charge (SOC) du système de condensateurs (10) (S42) ;
amener l'onduleur / convertisseur (9), lorsque l'état de charge (SOC) est supérieur à une valeur médiane (S0), à faire en sorte que le système de condensateurs augmente la puissance déchargée en ajoutant une première valeur de polarisation (S44, S45, S47, S48) ; et
amener l'onduleur / convertisseur (9), lorsque l'état de charge (SOC) est inférieur à la valeur médiane (S0), à faire en sorte que le système de condensateurs (10) augmente la puissance chargée du système de condensateurs (10) en ajoutant une deuxième valeur de polarisation (S49, S50, S51).

7. Dispositif de stockage d'énergie selon la revendication 6, **caractérisé en ce que** le contrôleur programmable (53) est en outre programmé pour augmenter la première valeur de polarisation alors qu'une différence entre l'état de charge (SOC) et la valeur médiane (S0) augmente (S45), et pour fixer la première valeur de polarisation à une valeur fixe (Pc) lorsque la différence entre l'état de charge (SOC) et la valeur médiane (S0) est égale ou supérieure à une valeur donnée (S48), et pour augmenter la deuxième valeur de polarisation alors qu'une différence entre l'état de charge (SOC) et la valeur médiane (SO) augmente (S50), et pour fixer la deuxième valeur de polarisation à une valeur fixe (-Pd) lorsque la différence entre l'état de charge (SOC) et la valeur médiane (S0) est égale ou supérieure à la valeur donnée (S51).

8. Dispositif de stockage d'énergie selon la revendication 6 ou la revendication 7, **caractérisé en ce que** le contrôleur programmable (53) est en outre programmé pour déterminer l'état de charge (SOC) du système de condensateurs (10) à partir d'une tension de bornes (Ec) du système de condensateurs (10) en appliquant un traitement de lissage à des valeurs correspondant à des tensions de bornes (Ec) détectées du système de condensateurs (10).

9. Procédé de commande pour stabiliser une puissance de sortie d'un générateur (1) connecté à un dispositif de stockage d'énergie (5), dans lequel le dispositif de stockage d'énergie (5) comprend un système de condensateurs (10) comprenant un certain nombre de condensateurs empilés et un onduleur / convertisseur (9) pour commander de manière sélective la charge et la décharge du système de condensateurs (10), le procédé comprenant les étapes suivantes effectuées par le dispositif de stockage d'énergie (5) consistant à :

amener l'onduleur / convertisseur (9), lorsque la puissance de sortie du générateur (1) dépasse un niveau cible, à charger le système de condensateurs (10) avec une puissance correspondant à une différence entre la puissance de sortie du générateur (1) et le niveau cible ; et
amener l'onduleur / convertisseur (9), lorsque la puissance de sortie du générateur (1) est inférieure au niveau cible, à faire en sorte que le système de condensateurs (10) décharge une puissance correspondant à une différence entre la puissance de sortie du générateur (1) et le niveau cible (S46) ;
**caractérisé par** les étapes consistant à :

déterminer un état de charge (SOC) du système de condensateurs (10) (S42) ;
amener l'onduleur / convertisseur (9), lorsque l'état de charge (SOC) est supérieur à une valeur médiane (S0), à faire en sorte que le système de condensateurs augmente la puissance déchargée en ajoutant une première valeur de polarisation (S44, S45, S47, S48) ; et
amener l'onduleur / convertisseur (9), lorsque l'état de charge (SOC) est inférieur à la valeur médiane (S0), à faire en sorte que le système de condensateurs (10) augmente la puissance chargée du système de condensateurs (10) en ajoutant une deuxième valeur de polarisation (S49, S50, S51).

FIG. 1

**FIG. 2**

EP 1 938 436 B1

FIG. 3

19

FIG. 4

S1 CALCULATE REQUIRED CHARGED/DISCHARGED POWER AMOUNT

S2 CHARGING/DISCHARGING REQUIRED ?

S3 DETECT Ec

S4 SOC CALCULATION COMPLETE ?

S5 $H1 < SOC < H2$ ?

S6 INPUT POWER > LIMIT VALUE ?

S7 LOWER INPUT POWER TO LIMIT VALUE

S9 DO NOT LIMIT POWER

S10 $L1 < SOC < L2$ ?

S11 OUTPUT POWER > LIMIT VALUE ?

S12 $H2 < SOC$ or $L2 > SOC$ ?

S13 LOWER OUTPUT POWER TO LIMIT VALUE

S14 SET INPUT/OUTPUT POWER TO ZERO kW

S8 OUTPUT COMMAND SIGNAL TO INVERTER/CONVERTER 9

START

END

FIG. 5

FIG. 6

FIG. 7

START

S21 CALCULATE REQUIRED CHARGED/DISCHARGED POWER AMOUNT

S22 CHARGING/DISCHARGING REQUIRED ? — NO

YES

S23 $Tc$ DETECTED ? — NO

YES

S24 $T1 < Tc < T2$ ? — NO

YES

S25 CHARGING ? — NO

S26 $T2 < Tc$ ? — NO

YES

S28 OUTPUT POWER > LIMIT VALUE ? — NO

YES

S27 INPUT POWER > LIMIT VALUE ? — NO

YES

S29 LOWER INPUT POWER TO LIMIT VALUE

S31 LOWER OUTPUT POWER TO LIMIT VALUE

S32 SET INPUT/OUTPUT POWER TO ZERO kW

S33 DO NOT LIMIT POWER

S30 OUTPUT COMMAND SIGNAL TO INVERTER/CONVERTER 9

END

EP 1 938 436 B1

FIG. 8

PRIOR ART
FIG. 9

FIG. 10

FIG. 11

EP 1 938 436 B1

START

S41
CALCULATE REQUIRED CHARGED/DISCHARGED POWER AMOUNT

S42  DETECT *Ec*

S43  SOC CALCULATION COMPLETE ?  →NO

YES

S44  *S0* < SOC < *SH* ?  →NO

YES

S47  *SH* < SOC ?  →NO

YES

S49  *SL* < SOC < *S0* ?  →NO

YES

S45
ADD BIAS VALUE
ACCORDING TO SOC
TO OUTPUT POWER

S48
ADD *-Pd* TO OUTPUT
POWER

S50
ADD BIAS VALUE
ACCORDING TO SOC
TO INPUT POWER

S51
ADD *Pc* TO INPUT
POWER

S46
OUTPUT COMMAND SIGNAL TO INVERTER/CONVERTER 9

END

FIG. 12

FIG. 13

**EP 1 938 436 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002101577 A
- US 20050225090 A1
- JP TOKUGAN2005305764 B